(19) Europäisches Patentamt
European Patent Office
Office européen des brevets

(11) **EP 3 594 254 A1**

(12) **EUROPEAN PATENT APPLICATION**

(43) Date of publication:
**15.01.2020 Bulletin 2020/03**

(51) Int Cl.:
**C08G 18/10** (2006.01)   **C08G 18/66** (2006.01)
**C08G 18/73** (2006.01)   **C08G 18/76** (2006.01)
**C08G 18/24** (2006.01)   **C08G 18/40** (2006.01)
**C08G 18/42** (2006.01)

(21) Application number: **18183485.4**

(22) Date of filing: **13.07.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Tensive S.r.l.**
**20124 Milano (IT)**

(72) Inventors:
• **GERGES, Irini**
**20099 Sesto San Giovanni (MI) (IT)**

• **MARTELLO, Federico**
**20141 MILANO (IT)**
• **TOCCHIO, Alessandro**
**SAN FRANCISCO, CALIFORNIA 94105 (US)**
• **TAMPLENIZZA, Margherita**
**20123 MILANO (IT)**
• **KOMAN, Stefano**
**20125 MILANO (IT)**
• **CHINCARINI, Giulia Maria Foscarina**
**23877 PADERNO D'ADDA (LC) (IT)**

(74) Representative: **Robba, Pierpaolo**
**Interpatent S.R.L.**
**Via Caboto, 35**
**10129 Torino (IT)**

(54) **METHOD OF PRODUCING BIOCOMPATIBLE AND ECOCOMPATIBLE POLYURETHANES THROUGH THE USE OF A HYPERBRANCHED-TO-PARTIALLY CROSSLINKED POLYMERIC PRECURSOR, AND POLYURETHANES PRODUCED BY SAID METHOD**

(57) The development of synthetic approaches to produce biocompatible and ecocompatible polyurethanes is in continuous expansion to cope with the ever-growing employment in biological, biomedical, pharmaceutical and environmental applications. In conventional approaches, a serious issue is the employment of toxic metalorganic catalysts. The invention enables drastically reducing, or even dispensing with the use of such catalysts, thereby reducing the biological and ecological impact of polyurethane products. The invention is based on the synthesis of an intermediate medium-to-high molecular weight hyperbranched-to-partially crosslinked polymeric precursor ("prepolymer") having an average molecular weight in the range 2 kDa to 500 kDa and a branching degree higher than 2%, which is capable of stabilizing and consolidating the macromolecular network during the critical pre-solidification phase. The prepolymer is synthesized by reacting low-to-medium molecular weight polyol polymer(s) with polyisocyanates and, for the synthesis, the stoichiometric ratio "r" between complementary functional groups OH in the polyols and NCO in the polyisocyanates is adjusted so as to be lower than the critical ratio "$r_c$".

FIG. 1

**Description**

Technical Field

The present invention relates to a method of producing biocompatible and ecocompatible polyurethanes based on the employment of a medium-to-high molecular weight, isocyanate-terminated hyperbranched-to-partially crosslinked polymeric precursor (prepolymer) capable of stabilizing and consolidating the macromolecular structure in the early phase of crosslinking.

The present invention relates also to the prepolymer obtained as an intermediate in said method and to the polyurethanes produced by said method.

Background Art

The closest prior art to this invention is related to methods and synthetic approaches to produce polyurethane-based biomaterials for biomedical and pharmaceutical applications.

WO2015162523A1 relates to a method for the synthesis and use of crosslinked polyurethane foams for the regeneration of connective tissue. The method adopts a "one-shot" reaction procedure between aliphatic isocyanates and polyols and requires the use of high-boiling point aprotic polar solvent(s) and at least one metalorganic and one amine-based catalyst. The examples reported in the invention show that the amount of tin-based metalorganic catalyst(s) used in the synthesis is in the range 3 to 7 pphp (parts per hundred polyol), and the gel point (i.e. the point at which the expanding foam loses its mobility) is in the range 20 to 40 seconds.

WO2017037649A1 relates to a biodegradable polyurethane-based implantable medical device for breast reconstruction/augmentation. The polyurethane of this document is a foamed crosslinked poly(urea-urethane-ester), obtained from aliphatic polyisocyanates and a mixture of polyols, including medium-to-high molecular weight amorphous biodegradable aliphatic polyester (average molecular weight in the range 20'000 to 60'000 Da), according to a "one-shot" reaction procedure. In example 1 of this document, it is indicated that the amount of metalorganic catalyst (i.e. ferric acetylacetonate) used is 0.1 pph and the amount of high-boiling point aprotic polar solvent (i.e. dimethylsulfonate, DMSO) is in the range 15 to 40 pph. The addition of DMSO to the reactive blend challenges the stability of $CO_2$ bubbles created during the foaming reaction. Indeed, in example 1, it is stated *"The polyol and hardener solution are mixed, by means of mechanical stirring at 400 - 600 rpm, from one to two minutes and let to expand freely for another minute, before solidification. "*. Accordingly, the free-raise expansion time is about 1 minute.

WO2011083144A1 relates to hydrophilic aliphatic polyurethane foams for wound dressing. The synthetic procedure for producing the polyurethane foams is based upon the crosslinking of: (i) hydrophilic building block prepolymer A (obtained by coupling Desmodur® N3300, a trifunctional aliphatic polyisocyanate, equivalent weight 193, to a monofunctional polyalkylene oxide, average number molecular weight 2'250 Da), (ii) optionally a building block B (Desmodur® N3400, a trifunctional aliphatic polyisocyanate, equivalent weight 193), (iii) heterocyclic aliphatic low-molecular weight diisocyanate with water. According to the procedure described in examples X1, X2 and in claims 1 to 3, the building block prepolymer A is obtained from an unbalanced stoichiometric ratio "r", so that the ratio between OH and NCO groups is 0.4 to 1.1, respectively. The high molar excess of NCO groups, combined to the chain-terminating action of monofunctional polyalkylene oxide, leads to the formation of a simple X-Y block (wherein X = Desmodur® N3300 and Y = monofunctional polyalkylene oxide) whose average molecular weight cannot exceed 3'000 Da.

The preparation of isocyanate-terminated prepolymers for the synthesis of polyurethane-based materials for biological applications is also reported in Sheikh et al. (Journal of Biomaterials Science Polymer Edition 2001; 12(7): pp. 707-19). The study includes a method for the preparation of a reactive prepolymer obtained by reaction of 2,4 toluene diisocyanate (aromatic diisocyanate) and a polyol mixture composed of castor oil and polyethylene glycol (PEG 1000) (50/50 w/w). The molar ratio between NCO and OH is 2 to 1. Accordingly, the $r_c/r$ value ranges from 1 to 1.1, depending on the effective number of reactive OH groups in castor oil. This raises concerns about the uncontrollable crosslinking of the prepolymer, which can take place during storage and prior to the curing process.

In Zhang et al. (Journal of Biomedical Materials Research A, 2003, Nov. 1; 67(2): pp. 389-400) a method for the preparation of branched isocyanate-terminated prepolymer is disclosed. Said prepolymer is obtained by reacting ascorbic acid with glycerol and lysine diisocyanate (LDI), using a molar ratio between isocyanate (NCO) and hydroxyl (OH) groups equal to 2. The study reports that structural characterization analysis of said prepolymer, by IR spectroscopy, showed that 50% free isocyanate groups remained in the reaction mixture. The so obtained prepolymer was directly converted to crosslinked foam, by reaction with water. According to the synthetic approach presented in this study, the stoichiometric ratio "r" equals the critical ratio "$r_c$" and is 0.5, i.e. ratio $r_c/r$ is 1. In this case, the reaction must be stopped before reaching the maximum conversion degree, in order to avoid uncontrolled crosslinking of the prepolymer.

WO2004009227A2 discloses an injectable isocyanate-terminated star prepolymer for the preparation of *in vivo* curing biomaterials. The isocyanate-terminated star prepolymer was obtained by the reaction of a diisocyanate and a low-molecular weight multifunctional polyol (molecular weight is preferably less than 400 Da), such as pentaerythritol, tripentaerythritol, sucrose, mannitol, glucose. Considering: (i) the chemical structure of the isocyanate-terminated prepolymer, illustrated in scheme 1 of this document, (ii) the relatively low molecular weights of the so obtained prepolymers (in examples 1 to 8 from 600 to 1'600 Da) and (iii) the very unbalanced molar ratios between NCO and OH groups, we can exclude the formation of coupling/bridging between prepolymers and accordingly the transformation of these prepolymers to medium-to-high-molecular weight hyperbranched-to-partially crosslinked precursor prior to curing.

WO2006055261A3 discloses a method for the preparation of biodegradable polyurethane foam by reacting a mixture of reactive polyol blend with polyisocyanates, which may include monomeric polyisocyanates and/or aliphatic isocyanate-terminated prepolymer, as indicated in claims 9 and 17. However, all examples reported in this document describe a method for the preparation of biodegradable polyurethane based on the employment of two components: polyester-based polyol (average molecular weight 900 Da) and monomeric lysine-polyisocyanate (i.e. lysine diisocyanate, LDI, and lysine triisocyanate, LTI). None of the examples includes a method for the preparation of medium-to-high-molecular weight isocyanate-terminated prepolymer. In examples 1 to 6, monomeric LDI was added to the reactive polyol blend as it is (i.e. without total or partial transformation to a prepolymer), in an amount of 79.5 to 86.8 pphp. The same synthetic approach is reported in examples 8 to 13 (LDI, 48.3 to 79.1 pphp) and examples 16 and 17 (LTI, 34.5 to 51.7 pphp). The high molar excess of the monomeric polyisocyanates indicated in the examples provides an effective end-capping of the low molecular weight polyester triol (900 Da) with NCO groups, but excludes the formation of coupling/bridging between the reactive prepolymers and accordingly precludes the formation of medium-to-high molecular weight hyperbranched-to-crosslinked isocyanate-terminated intermediate precursor prior to curing with polyols.

Isocyanate-terminated prepolymers were also employed in the preparation of polyurethane foam, which poses fewer restrictions against the use of aromatic polyisocyanates but requires high levels of hygiene standards, due to concerns about health repercussions caused by exposure to monomeric isocyanates during the industrial production.

US5646230A discloses a method for the preparation of linear structured isocyanate-terminated prepolymers to produce polyurethane/polyurea elastomers. Said prepolymers are prepared by reacting aromatic and aliphatic polyisocyanates with low molecular weight polyether polyols. According to claim 1 of said patent document, the number of hydroxyl groups of said polyether polyols is 1.8 to 2.5, which precludes the formation of medium-to-high molecular weight branched or hyperbranched isocyanate-terminated precursors.

A process of coupling/bridging polymers for obtaining reactive prepolymers of high molecular weight is reported in US3179625A, where diisocyanates are employed as chain extenders for linear polyether and/or polyester backbones, with the aim of creating high-molecular weight isocyanate-terminated prepolymers. The so obtained linear reactive isocyanate-terminated prepolymers are chain-extended, branched or partially crosslinked in a second step, by adding crosslinker(s) which cause(s) an increase in the prepolymer viscosity as a function of the achieved chain extension. The stoichiometric ratio "r" between OH and NCO is higher than the critical ratio "$r_c$", i.e. $r_c/r < 1$. This causes uncontrolled crosslinking to the chain-extended prepolymer during storage. Indeed, in Example 1 of US3179625A, it is stated *"Samples containing no acid stabilizer gelled when placed in the oven under similar conditions ".* Accordingly, addition of acid, for up to 2% w/w, is necessary to stabilize the chain-extended prepolymer prior to curing in moulds, etc. Moreover, the preparation of said chain-extended prepolymer requires heating at high temperatures, in the range 120°C to 140°C, prior to curing, which raises concerns regarding hygiene and versatility for processing in foaming machines.

## Summary of the invention

It is an object of the present invention to provide a method of producing biocompatible and ecocompatible polyurethanes, which overcomes the drawbacks of the current approaches, in particular:

1) the biological and environmental impact of high performing but toxic metalorganic catalysts, especially tin-based ones;
2) lack of bio- and ecocompatible high performing alternatives to tin-based catalysts, especially in case of polyurethane formulations requiring the use of aliphatic polyisocyanates and/or polyols of low-to-moderate reactivity;
3) the scarce morphological stability after polymer crosslinking, caused by the drastic reduction of the amount of catalyst(s), especially for formulations in point 2.

According to a first aspect, the invention therefore provides a method based on the synthesis and employment of a medium-to-high molecular weight hyperbranched-to-partially crosslinked reactive polymeric precursor ("prepolymer") capable of stabilizing and consolidating the macromolecular structure during the early phase of crosslinking of the polyurethane-based materials, especially polyurethane foams. The medium-to-high molecular weight hyperbranched-to-partially crosslinked prepolymer of the present invention can be synthesized by linking/bridging branched and/or linear polymers, having average molecular weight ranging from 1'000 to 50'000 Da, more preferably from 5'000 Da to 25'000 Da and most preferably from 7'000 Da to 15'000 Da, with low molecular weight (average molecular weight 50 Da to 2'000 Da) polyfunctional polyisocyanate molecules (having functionality f ≥ 2). The synthesis of the medium-to-high molecular weight hyperbranched-to-partially crosslinked reactive prepolymer can take place in the presence or in the absence of monofunctional monomers having a general formula R-XH, where R includes: aliphatic cyclic or acyclic alkyl and its derivatives; aliphatic cyclic or acyclic alkylene and its derivatives; aryl and its derivatives; aliphatic or aromatic heterocyclic groups, and X includes: nitrogen (N), oxygen (O), sulphur (S), chlorine (Cl), bromine (Br).

The prepolymer is converted, in a second step, to stable crosslinked polyurethane in the absence of metalorganic catalyst(s), including tin-based ones, or in the presence of extremely low amounts thereof, lower than 1 pphp, preferably lower than 0.1 pphp and more preferably lower than 0.01 pphp.

The synthesis of said prepolymer takes place in a molar excess of isocyanate, which excess according to the invention is adjusted to allow effective end capping and bridging between the polyol segments and to allow overcoming the current limitations of the so far known prior art, related to uncontrolled crosslinking. This can be achieved by keeping the stoichiometric ratio "r" between the complementary functional groups NCO and OH lower or slightly lower than the critical ratio "$r_c$", more particularly such that the condition $20 > r_c/r \geq 2$ is met. The resulting prepolymer is characterized by an average molecular weight ranging from 2'000 to 500'000 Da and a branching degree higher than 2%.

The critical ratio "$r_c$" can be calculated according to the Flory-Stockmayer equation:

$$r_c = \frac{1}{(1 + \rho.(f-2))} \qquad \text{Equation (1)}$$

where p is defined as the ratio of the equivalent number of the molecule(s) having the highest number of functions per molecule to the sum of the equivalent number of the molecules having the same type of functional group, and f is the number of reactive functional groups (functionality).

In turn, the branching degree can be calculated according to equation:

$$BD\% = \frac{D+T}{D+T+L} \times 100 \qquad \text{Equation (2)}$$

where D, T and L are the fractions of dendritic, terminal and linear units, respectively.

Setting the lower limit of the range for $r_c/r$ to 2 avoids risks of uncontrolled crosslinking of the reactive prepolymer, which would occur in case of values of $r_c/r$ close to or lower than 1. Preferably, the values of "r" and "$r_c$" are adjusted so that $r_c/r$ falls in the lower half of the above range and, more preferably, so that $7 \geq r_c/r \geq 3$.

Thanks to its capability of stabilizing and consolidating the macromolecular network, the so obtained prepolymer allows drastically reducing, and even setting to zero, the amount of toxic catalysts, especially tin-based ones, employed in the final crosslinking phase. Thus, the polyurethanes obtained according to the invention are particularly suitable for biomedical, pharmaceutical/pharmacological and environmental applications, and can bring significant advantages in reducing the environmental impact of production waste disposal. As examples of such applications we can mention:

- as to biomedical applications, the development of: three-dimensional scaffolds for tissue repair and regeneration; implantable devices for local and controlled drug release; implantable devices for high-precision in vivo imaging, localized diagnostics and treatment of lesions; neurotransmitter implantable devices to restore mobility skills caused by neurodegenerative diseases.
- as to pharmaceutical/pharmacological applications, the development of carriers for targeted release of drugs and bioactive molecules;
- as to environmental applications, the manufacturing of devices and microdevices for molecules tracking in soil, rivers, seas and oceans.

Of course, such a list is not to be intended as an exhaustive list.

The synthetic approach of the present invention is particularly advantageous for the manufacturing of: polyurethane adhesives; soft, flexible and hard polyurethane foams; thin polyurethane films for surface coating and painting; and polyurethane sheets and laminates for food and drug packaging.

As far as the foams are concerned, the method of the present invention is particularly suitable to produce flexible foams characterized by very low compression elastic modulus and low compression set, where the employment of high molecular weight amorphous segments is necessary to achieve such mechanical behaviour.

According to a preferred feature of the present invention, the so obtained prepolymer is crosslinked in the presence of bioactive low molecular weight molecule(s), drug(s), peptide(s), polypeptide(s), protein(s), having at least one isocyanate group and/or at least one secondary and/or primary amine and/or at least one hydroxide and/or at least one sulfhydryl group, with the aim of enhancing the biological performance of the polyurethane-based foam and/or achieving controlled release of such bioactive molecules, *in vitro* and/or *in vivo*.

Optionally, an additional amount of low molecular weight polyfunctional monomer(s) (having $f \geq 2$) can be added to the so obtained prepolymer, with the aim of adjusting the total functionality of isocyanate compounds (also known as the isocyanate index or NCO index), prior to the crosslinking phase.

According to a preferred feature of the present invention, organic and/or inorganic filler(s) can be embedded in the polymeric matrix, with the aim of: (i) enhancing the biological performance; (ii) enabling exploitation in medical applications such as *in vivo* imaging, diagnostic and local treatment of lesions; and (iii) enabling exploitation in environmental applications, such as tracking of molecules in soil, rivers, seas and oceans. Said fillers can be added during the foaming step or even after the matrix has completely solidified.

According to a preferred feature of the present invention, aromatic mono- and polyisocyanates are either employed as the unique source of NCO groups or employed in combination with aliphatic polyisocyanates.

According to a preferred feature of the present invention, ionic and/or non-ionic surfactants, as well as additives such as pore stabilizers, flame retardants and antioxidants, can be added to the reactive isocyanate and polyol blends, prior to casting the so obtained prepolymer, with the aim of controlling the creaming profile and the pore size in case of crosslinked foams, and to enhance the overall properties of the final products.

Optionally, in case of polyurethane foams, amine-based biocompatible catalysts can be employed to boost the creaming profile during the crosslinking phase. The amine-based catalyst may include reactive primary and/or secondary amino groups as well as tertiary unreactive amino groups.

Optionally, in case of polyurethane foams, pentane, isopentane, cyclopentane, supercritical-$CO_2$ and low-thermal conductivity hydrofluoroolefins can be used as auxiliary blowing agent(s) in addition to carbon dioxide ($CO_2$) produced during the reaction of polyisocyanates with water and/or low molecular weight carboxylic acids (i.e. during the foaming reaction).

In a second aspect, the invention also provides bio- and ecocompatible polyurethanes obtained by the method of the invention.

Exemplary applications and uses of such polyurethanes have been disclosed above, in connection with the method.

The prepolymer synthesized in the method of the invention could be used as such, before being crosslinked to polyurethane. Among such possible uses we can mention for instance precursors for sol-gel materials, adhesives, painting, and surface coating.

In a further aspect, the invention provides therefore a medium-to-high molecular weight hyperbranched-to-partially crosslinked prepolymer having an average molecular weight in the range 2 kDa to 500 kDa and a branching degree higher than 2% obtained as an intermediate in the method of the invention.

By summarizing, the synthetic approach of the present invention enables drastic reduction of the amount of metalorganic catalysts during the synthesis and prevents structural collapse related to instability of the polymeric network during the early phase of crosslinking. Thus, the advantages of said approach lie not only in boosting the employment of polyurethanes in biomedical, pharmaceutical, environmental and food contact applications, but also in reducing the environmental impact of industrial foam disposal, especially foams employed in mattresses fabrication, automotive industry, etc.

Brief description of the drawings

The above and other features and advantages of the present invention will become apparent from the following description of preferred embodiments made by way of nonlimiting example with reference to the accompanying drawings, in which:

- Figures 1 to 3 are schematic representations of examples of the reactions for synthesizing the hyperbranched-to-partially crosslinked, isocyanate-terminated prepolymer according to the invention and obtaining therefrom a crosslinked polyurethane, compared to the prior art; more particularly:

  - Figure 1 shows methods for obtaining reactive prepolymers from branched segments and low molecular weight polyisocyanate(s);
  - Figure 2 shows methods for obtaining reactive prepolymers from linear segments and low molecular weight polyisocyanate(s); and
  - Figure 3 shows methods for obtaining reactive prepolymers from linear and/or branched segments and low molecular weight polyisocyanate(s), in the presence of monofunctional chain-terminating monomers;

- Figure 4 shows the creaming (expansion) profiles of some examples of polyurethane foams obtained by using the hyperbranched-to-partially crosslinked reactive prepolymer synthesized according to the procedure described in examples 1 to 10 of the present invention;

- Figure 5 shows optical microscope micrographs of three of the polyurethane-based foams considered in Fig. 4;
- Figure 6 shows vertical sections of some examples of the polyurethane-based foams considered in Figs. 4 and 5.

Detailed description of preferred embodiments of the invention

The present invention provides a synthetic approach to the production of biocompatible and ecocompatible polyurethanes by employing an intermediate reactive precursor composed of a medium-to-high molecular weight, hyperbranched-to-partially crosslinked prepolymer.

The present invention provides also synthetic approaches for obtaining said reactive precursor.

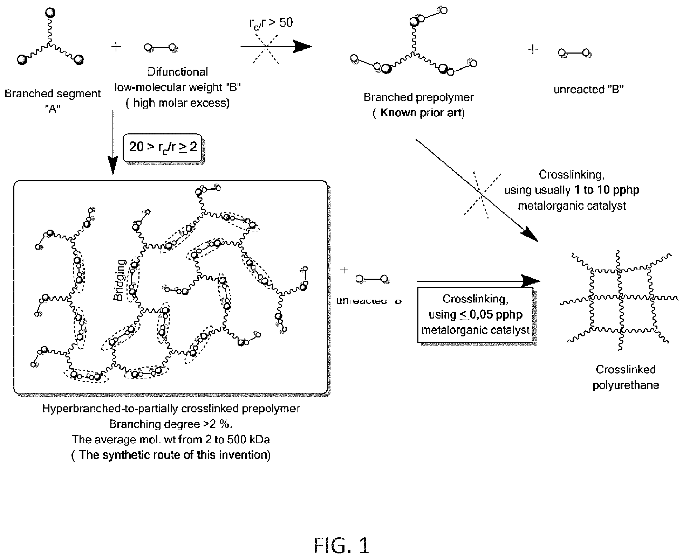

Figures 1 to 3 are schematic representations of examples of the reactions for synthesizing the hyperbranched-to-partially crosslinked, isocyanate-terminated prepolymer according to the invention and obtaining therefrom a crosslinked polyurethane, compared to the prior art.

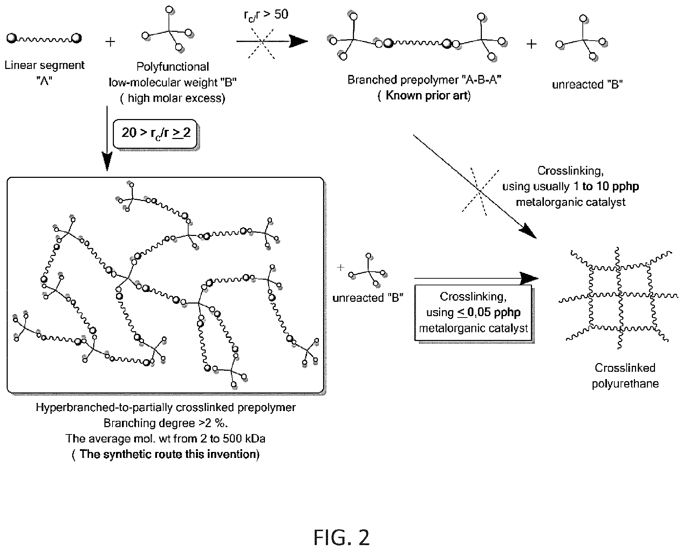

More specifically, a polyfunctional branched polyol polymer (Fig. 1) or a polyfunctional linear polyol polymer (Fig. 2), having an average molecular weight preferably ranging from 1'000 Da to 50'000 Da, more preferably from 5'000 Da to 25'000 Da and most preferably from 7'000 Da to 15'000 Da, is linked/bridged to a low-molecular weight polyfunctional molecule (isocyanate monomer), having an average molecular weight ranging from 50 Da to 2 kDa and $f \geq 2$. A bifunctional isocyanate molecule is shown in Fig. 1 and a molecule with $f > 3$ is shown in Fig. 2.

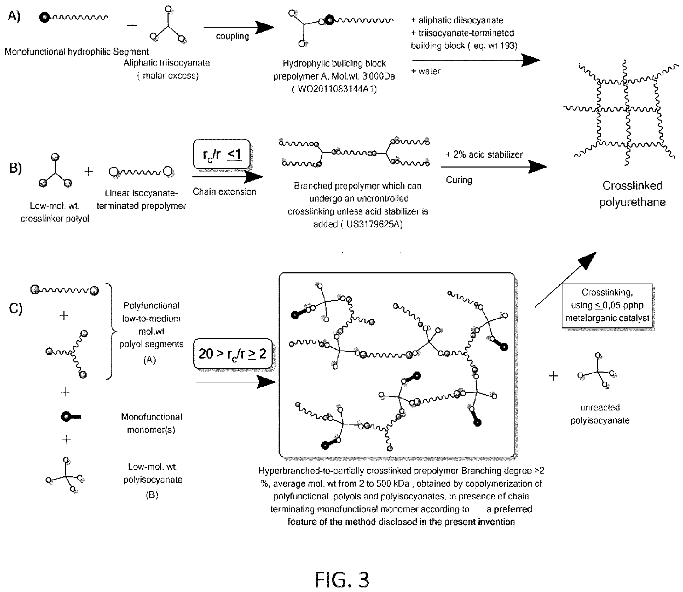

In Fig. 3, a low-to-medium molecular weight polyfunctional polyol polymer, having an average molecular weight as indicated above in connection with Figs. 1 and 2, is linked/bridged to a low molecular weight polyfunctional molecule (isocyanate monomer), having an average molecular weight as indicated above in connection with Figs. 1 and 2 and $f \geq 2$, in the presence of monofunctional low-molecular weight monomer(s) having a general chemical structure R-XH. As said, R includes aliphatic cyclic or acyclic alkyl and its derivatives, aliphatic cyclic or acyclic alkylene and its derivatives, aryl and its derivatives and aliphatic or aromatic heterocyclic groups, and X includes nitrogen (N), oxygen (O), sulphur (S), chlorine (Cl) and bromine (Br).

The polyol and isocyanate starting materials are denoted A and B, respectively, in the Figures.

The average molecular weight of the resulting hyperbranched-to-partially crosslinked prepolymer can be adjusted by controlling the number of links (bridges) between the starting molecules. For such a control of the molecular weight and the branching/crosslinking degree of such reactive precursor, the stoichiometric ratio "r" between the complementary OH and NCO functional groups is kept lower or slightly lower than the critical ratio "$r_c$". The critical ratio "$r_c$" is calculated according to equation (1) above.

According to the invention, the ratio between "r" and "$r_c$" is adjusted so that $20 > r_c/r \geq 2$ and preferably so that $r_c/r$ is in the lower half of the above range and more preferably in the range $7 \geq r_c/r \geq 3$.

Particularly preferred ranges will result from the Examples that follow. The resulting prepolymer has an average molecular weight ranging from 2'000 Da to 500'000 Da and a branching degree BD%, calculated according to equation (2) above, higher than 2%.

Values of "r" lower or slightly lower than "$r_c$" avoid uncontrollable crosslinking of the reactive prepolymer prior to the curing step.

The reactive prepolymer thus obtained is then converted, in the presence of the unreacted polyfunctional molecule(s), into stable crosslinked polyurethane. As proved by the following examples, use of the hyperbranched-to-partially crosslinked polymeric precursor allows using extremely low amounts of metalorganic catalyst(s) in the crosslinking phase, or even dispensing with use thereof. In particular, if a catalyst is used, the amount thereof will be lower than 1 pphp, preferably lower than 0.1 pphp, and more preferably lower than 0.01 pphp.

Figures 1 to 3 also show prior art procedures for prepolymer production, compared to the method of the present invention.

With reference to Figs. 1 and 2, the synthesis of the reactive prepolymer is usually performed by using very high molar excess of NCO, such that $r_c/r > 50$, and results in isocyanate-terminated prepolymers of which the crosslinking usually requires the employment of 1 to 10 pphp metalorganic catalyst(s). Such a very high molar excess of low-molecular weight polyisocyanates is likely used to achieve a chain-terminating effect and to hinder chain extension between the macromolecules.

In Figs. 3A and 3B, the prior methods for the preparation of a reactive prepolymer in the presence of monofunctional monomer(s) disclosed in WO2011083144A1 and US3179625A, respectively, are schematically represented. According to WO2011083144A1, a simple building block with low molecular weight results from the coupling of the polyisocyanate and the monofunctional monomer. According to US3179625A, after the synthesis of the chain-extended reactive prepolymer, acids are added to hinder the uncontrolled crosslinking. On the contrary, according to the present invention, as shown in Fig. 3C, copolymerization with monofunctional monomers takes place in the same phase of coupling/bridging of the polymeric segments, so that such monofunctional monomers are directly bound to the hyperbranched-to-partially crosslinked reactive prepolymer. The main advantage of the present approach is to achieve a stable reactive high-molecular weight prepolymer, without risks of uncontrollable crosslinking prior to casting, while allowing a drastic reduction in the amount of the metalorganic catalysts employed in the synthesis, due to the remarkable stability of the cured polymer, especially during the early phase of crosslinking. The advantages of the invention in terms of reduction of biological and environmental impact of polyurethanes are therefore apparent.

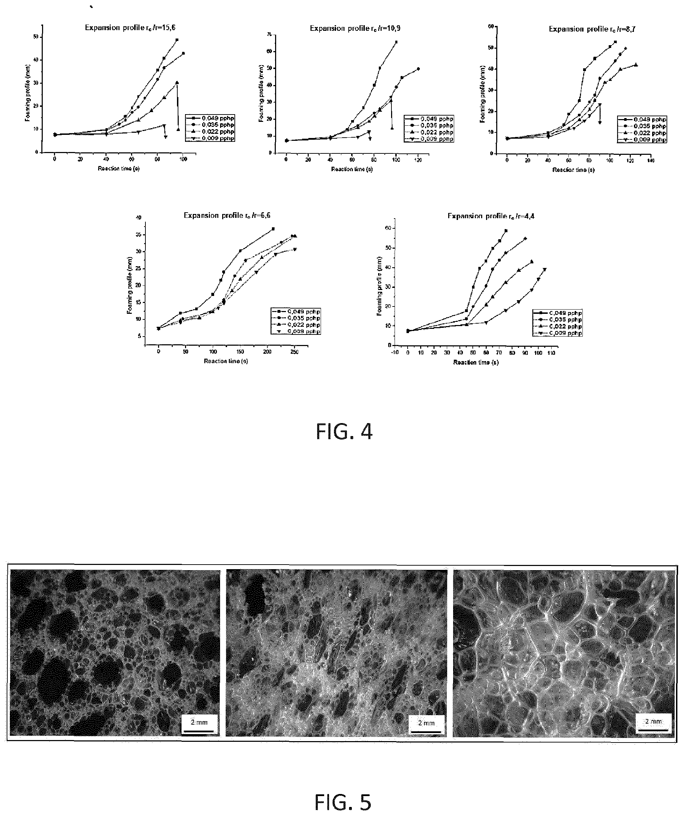

Figs. 4 to 6 show the results attained with some examples of polyurethanes produced according to the invention and they will be discussed in connection with the corresponding examples.

## EXAMPLES

EXAMPLES 1 to 10:

A polyisocyanate mixture was prepared by reacting poly(epsilon caprolactone-co-glycolide)triol of average molecular weight 10'000 Da (64.25 pphp) with hexamethylenediisocyanate (HDI), in the presence of non-ionic surfactant (Span 80, 1.22 pphp) and stannous octoate (0.03 pphp) as catalyst, at 60°C under stirring under inert conditions for 2 hours. Additional amount of HDI was added to the prepolymer solution before crosslinking with the polyol mixture. The polyisocyanate mixture, including the hyperbranched-to-partially crosslinked isocyanate-terminated prepolymer, was mechanically mixed to the polyol blend - including additional low molecular weight crosslinking agent (Glycerol, 7.60 pphp), polyethylene glycol (PEG) (6'000 Da, 21.20 pphp) as soft segment, non-ionic surfactants (Span 85, 0.24 pphp, and Tween 80, 2.18 pphp), and water (3.34 pphp) as foaming agent - for 30 seconds at 80°C, raised under atmospheric pressure for 1 to 3 minutes, and finally kept in oven for 24 hours, to complete the curing reaction. A pro-crosslinking metalorganic catalyst (dibutyltin dilaureate, DBT) was employed in the syntheses in an amount of 0.05 pphp for Examples 1 to 5 and 0.01 pphp for Examples 6 to 10. Pphp was calculated as weight ratio to the total weight of the polyol mixture, having f > 2, including water. The NCO index was 105 and it was calculated as the fraction of the total NCO equivalents x 100 divided by the total OH equivalents. According to this procedure, the medium-to-high molecular weight hyperbranched-to-crosslinked prepolymer can be obtained by setting ratio $r_c/r$ in a range from 16 to 2, preferably from 10 to 4 and more preferably from 6 to 4. The reaction parameters are reported in Table 1.

The average number molecular weight of the so obtained hyperbranched-to-partially crosslinked reactive prepolymer was determined by viscosity measurements, according to ISO 1628-1 guidelines. The compression set was measured according to ISO 1856 guidelines at 25°C and by applying 25% deformation for 30 minutes. The shrinkage degree of the raw foams was measured after 24 hours from the gel point. The aforementioned characteristics are summarized in Table 2.

**Table 1.** Synthetic parameters of the polyurethane-based foams obtained according to the procedure described in Examples 1 to 10.

| Parameter | Example Number | | | | | | | | | |
|---|---|---|---|---|---|---|---|---|---|---|
| | 1 | 2 | 3 | 4 | 5 | 6 | 7 | 8 | 9 | 10 |
| DBT (pphp) | 0.05 | 0.05 | 0.05 | 0.05 | 0.05 | 0.01 | 0.01 | 0.01 | 0.01 | 0.01 |
| r | 0.04 | 0.05 | 0.06 | 0.09 | 0.13 | 0.04 | 0.05 | 0.06 | 0.09 | 0.13 |
| $r_c$ | 0.56 | 0.56 | 0.56 | 0.56 | 0.56 | 0.56 | 0.56 | 0.56 | 0.56 | 0.56 |
| $r_c/r$ | 15.6 | 10.9 | 8.7 | 6.6 | 4.4 | 15.6 | 10.9 | 8.7 | 6.6 | 4.4 |

**Table 2.** Characteristics of the foams obtained according to the procedure described in Examples 1 to 10.

| Characteristic | Example Number | | | | | | | | | |
|---|---|---|---|---|---|---|---|---|---|---|
| | 1 | 2 | 3 | 4 | 5 | 6 | 7 | 8 | 9 | 10 |
| Prepolymer Mol. Wt. (kDa) | 30.3 | 70.1 | 120.6 | 180.6 | 273.4 | 30.3 | 70.1 | 120.6 | 180.6 | 273.4 |
| Gel point(s) | 100 | 95 | 92 | 85 | 75 | - | - | - | 250 | 105 |
| Density (Kg/m$^3$) | 85 | 60 | 35 | 34 | 30 | 400 | 400 | 200 | 92 | 35 |
| Shrinking (%) | 15 | 5 | 0 | 0 | 0 | - | - | - | 40 | 0 |
| Collapse/Boiling | - | - | - | - | - | √ | √ | √ | - | - |

(continued)

| Characteristic | Example Number | | | | | | | | | |
|---|---|---|---|---|---|---|---|---|---|---|
| | **1** | **2** | **3** | **4** | **5** | **6** | **7** | **8** | **9** | **10** |
| Compression elastic modulus (kPa) | 12 | 10 | 5 | 4 | 6 | - | - | - | 4 | 5 |
| Compression set (%) | 20 | 17 | 10 | 11 | 9 | - | - | - | 9 | 8 |

In Table 2, as well as in the following Tables 4 and 6, symbols "√" and "-" indicate that the concerned characteristic(s) did and did not occur, respectively.

The creaming profiles (foaming profile in millimetres vs. reaction time, in seconds) of polyurethane-based foams obtained according to the procedures described in Examples 1 to 10 are reported in Fig. 4. The creaming profiles were evaluated for different ratios $r_c/r$ (namely: 15.6, 10.9, 9.7, 6.6, 4.4) and, for each value of $r_c/r$, for different amounts of the pro-crosslinking metalorganic catalyst employed in the syntheses (namely: 0.049 pphp, 0.036 pphp, 0.022 pphp, 0.009 pphp). The results confirm that it is possible to obtain stable crosslinked foams, even using extremely low amounts of metalorganic catalysts, when ratio $r_c/r$ is set in the range 4 to 7, and accordingly confirm the validity of the synthetic route of the present invention.

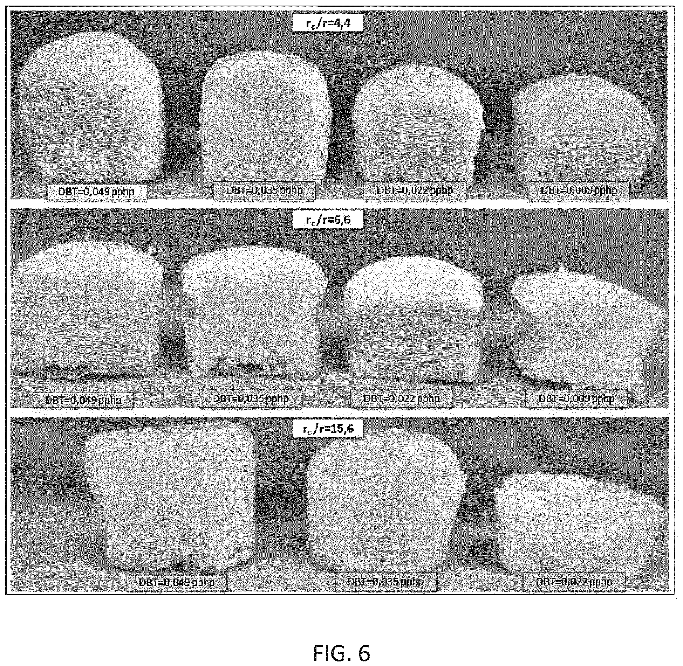

The foam characteristics, in terms of shrinking after 24 hours from the gel-point, collapse/boiling, density and homogeneity of the porous structure, were evaluated for three of the values of ratio $r_c/r$ considered in Fig. 4 (namely: 15.6, 6.6 and 4.4) and for each of them, for the same four amounts of catalyst as considered in Fig. 4. The enhancement of the pore structure, in terms of increasing interconnectivity between pores and reducing the fraction of collapsed pores, is illustrated in Fig. 5. The Figure shows optical microscope micrographs of three polyurethane-based foams (vertical section, scale bar = 2mm) obtained according to the procedure described in Examples 6 to 10, where the pro-crosslinking metalorganic catalyst was employed in an amount of 0.01 pphp. Open pores characterize the foam obtained by setting ratio $r_c/r$ to 4.4 (left), closed and inhomogeneous pores (middle and right) characterize the foams obtained by setting ratio $r_c/r$ to 15.6 and 10.9, respectively. The enhancement of foam morphology, in terms of preventing boiling and minimizing foam shrinkage, obtained thanks to the adoption of the synthetic approach of the present invention is illustrated in Figure 6. The Figure show vertical sections of polyurethane-based foams obtained according to the procedure described in Examples 1 to 10. Also, these Figures confirm that it is possible to obtain stable and crosslinked foams, even using extremely low amounts of metalorganic catalysts, especially when ratio $r_c/r$ is set in the range 4 to 7, and accordingly confirm the validity of the synthetic route of the present invention.

EXAMPLES 11 to 20:

A polyisocyanate mixture was prepared by reacting poly(lactic-co-glycolic acid)tetraol 15'000 Da (57.8 pphp) and polyethylene glycol 6'000 Da (21.03 pphp) with tetramethylenediisocyanate (MDI), in the presence of non-ionic surfactant (Tween 20, 7.36 pphp) and stannous octoate (0.05 pphp) as catalyst, at 70°C under stirring under inert conditions for 2 hours. Additional amount of isophoronediisocyanate (IPDI) was added before crosslinking with the polyol mixture. The NCO index was 95. The polyisocyanate mixture was mechanically mixed to the polyol blend, including an additional crosslinker (Glycerol, 7.82 pphp), non-ionic surfactants (Span 60, 0.24 pphp, and Tween 85, 2.25 pphp) and water (3.44 pphp) as foaming agent, for 20 seconds at 80°C, raised at atmospheric pressure for 1 to 4 minutes and kept in oven for 24 hours to complete the curing reaction. Foams obtained according to this procedure do not require the employment of pro-crosslinking metalorganic catalyst. A biocompatible amine-based catalyst (1,4-diazabicyclo[2.2.2]octane, DABCO) was employed, in an amount of 0.04 pphp in Examples 11 to 15 and 0.008 pphp in Examples 16 to 20, to boost the foaming reaction and to obtain open-pore cells and low-density foams. According to this procedure, the medium-to-high molecular weight hyperbranched-to-crosslinked prepolymer can be obtained by setting ratio $r_c/r$ in a range from 10 to 2, preferably from 5 to 2 and more preferably from 4 to 3. The reaction parameters are reported in Table 3. The characteristics of the foams are reported in Table 4.

**Table 3.** Synthetic parameters of the polyurethane-based foams obtained according to the procedure described in Examples 11 to 20.

| Parameter | Example Number | | | | | | | | | |
|---|---|---|---|---|---|---|---|---|---|---|
| | **11** | **12** | **13** | **14** | **15** | **16** | **17** | **18** | **19** | **20** |
| DABCO (pphp) | 0.04 | 0.04 | 0.04 | 0.04 | 0.04 | 0.008 | 0.008 | 0.008 | 0.008 | 0.008 |

(continued)

| Parameter | Example Number | | | | | | | | | |
|---|---|---|---|---|---|---|---|---|---|---|
| | 11 | 12 | 13 | 14 | 15 | 16 | 17 | 18 | 19 | 20 |
| r | 0.08 | 0.09 | 0.11 | 0.14 | 0.19 | 0.08 | 0.09 | 0.11 | 0.14 | 0.19 |
| $r_c$ | 0.57 | 0.57 | 0.57 | 0.57 | 0.57 | 0.57 | 0.57 | 0.57 | 0.57 | 0.57 |
| $r_c/r$ | 7.30 | 6.07 | 5.02 | 4.06 | 3.03 | 7.30 | 6.07 | 5.02 | 4.06 | 3.03 |

**Table 4.** Characteristics of the foams obtained according to the procedure described in Examples 11 to 20.

| Characteristic | Example Number | | | | | | | | | |
|---|---|---|---|---|---|---|---|---|---|---|
| | 1 | 2 | 3 | 4 | 5 | 6 | 7 | 8 | 9 | 10 |
| Prepolymer Mol. Wt. (kDa) | 54.4 | 85.2 | 150.4 | 232.5 | 290.1 | 54.4 | 85.2 | 150.4 | 232.5 | 290.1 |
| Gel point (s) | 90 | 92 | 95 | 87 | 70 | - | - | - | 120 | 112 |
| Density (Kg/m$^3$) | 20 | 23 | 28 | 31 | 30 | 420 | 400 | 380 | 200 | 23 |
| Shrinking (%) | 0 | 0 | 0 | 0 | 0 | - | - | - | 50 | 0 |
| Collapse/Boiling | - | - | - | - | - | √ | √ | √ | - | - |
| Compression elastic modulus (MPa) | 1.8 | 2.1 | 2.2 | 2.5 | 2.9 | - | - | - | 2.4 | 3 |
| Compression set (%) | 20 | 18 | 22 | 21 | 22 | - | - | - | 22 | 21 |

EXAMPLES 21 to 25:

A polyisocyanate mixture was prepared by reacting poly(epsilon caprolactone-co-glycolide)tetraol 8'000 Da (66.0 pphp) and HDI, in the presence of non-ionic surfactant (Span 80, 0.34 pphp) and stannous octoate (0.02 pphp) as catalyst, at 70°C under stirring under inert conditions for 2 hours. Additional amount of HDI and MDI were added before crosslinking with the polyol mixture. The values of "r" and "$r_c$" were set to 0.15 and 0.35, respectively. Thus, the molar excess of NCO towards OH groups for the syntheses of the hyperbranched-to-partially crosslinked reactive prepolymer was 7.23 and ratio $r_c/r$ was 2.35. The average number molecular weight (Mn) of the hyperbranched-to-partially crosslinked reactive prepolymer, measured by viscosimetric analysis according to ISO 1628-1 guidelines, was 278 kDa. The so obtained polyisocyanate mixture was mechanically mixed to the polyol blend, including an additional crosslinker [N,N,N',N'-Tetrakis(2-hydroxypropyl)ethylene-diamine (Quadrol), 10.16 pphp], non-ionic surfactant (Tween 85,0.06 pphp), soft segment (polyethylene glycol) 6'000 Da (20.23 pphp) and DBT (0.01 pphp), for 10 seconds at 70°C. An aqueous solution of (4-aminobutyl)guanidine (Agmatine) (3 pphp) was added to the reactive mixture, mechanically mixed for other 30 seconds, raised at atmospheric pressure for 1 to 2 minutes and kept in oven for 24 hours to complete the curing reaction. The concentrations of aqueous Agmatine solutions and the NCO indexes of the syntheses of Examples 21 to 25 are reported in Table 5. The foam characteristics are reported in Table 6.

**Table 5.** Concentration of aqueous Agmatine solutions and NCO indexes of the polyurethane-based foams obtained according to the procedure described in Examples 21 to 25

| Parameter | Example Number | | | | |
|---|---|---|---|---|---|
| | 21 | 22 | 23 | 24 | 25 |
| Agmatine solution concentration % (w/w) | 2 | 4 | 6 | 8 | 10 |
| NCO Index | 100.9 | 102.0 | 103.3 | 104.5 | 105.8 |

Table 6. Characteristics of the foams obtained according to the procedure described in Examples 21 to 25.

| Characteristic | Example Number | | | | |
|---|---|---|---|---|---|
| | 21 | 22 | 23 | 24 | 25 |
| Gel point (s) | 70 | 67 | 60 | 55 | 48 |
| Density ($Kg/m^3$) | 35 | 32 | 26 | 21 | 17 |
| Shrinking (%) | 0 | 0 | 0 | 0 | 0 |
| Collapse/ Boiling | - | - | - | - | - |
| Compression elastic modulus (kPa) | 40 | 37 | 30 | 31 | 28 |
| Compression set (%) | 15 | 15 | 16 | 14 | 12 |

**Claims**

1. Method of producing biocompatible and ecocompatible crosslinked polyurethanes, comprising the steps of:

   - synthesizing a reactive polyurethane polymer precursor, hereinafter in short "prepolymer", by reacting low-to-medium molecular weight polyol polymer(s) with polyisocyanates; and
   - crosslinking said prepolymer,

   **characterised in that** said prepolymer is a medium-to-high molecular weight hyperbranched-to-partially crosslinked prepolymer having an average molecular weight in the range 2 kDa to 500 kDa and a branching degree higher than 2%, and **in that**, for said synthesizing step, the stoichiometric ratio "r" between complementary functional groups hydroxyl in the polyols and isocyanate in the polyisocyanates is adjusted so as to be lower than the critical ratio "$r_c$", calculated according to the Flory-Stockmayer equation

$$r_c \; = \; \frac{1}{(1+\rho.(f-2))},$$

   where p is the ratio of the equivalent number of molecule(s) having the highest number of functions per molecule to the sum of the equivalent number of the molecules having the same type of functional group, and f is the number of reactive functional groups

2. The method as claimed in claim 1, wherein the stoichiometric ratio "r" between complementary functional groups hydroxyl in the polyols and isocyanate in the polyisocyanates is adjusted so that the ratio $r_c/r$ between the critical ratio "$r_c$" and the stoichiometric ratio "r" meets the condition $20 \geq r_c/r \geq 2$, preferably so that ratio $r_c/r$ falls in the lower half of range $20 \geq r_c/r \geq 2$, and more preferably so that $7 \geq r_c/r \geq 3$.

3. The method as claimed in claim 1 or 2, wherein said medium-to-high molecular weight hyperbranched-to-partially crosslinked prepolymer is synthesized by coupling/bridging and end-capping low-to-medium molecular weight polyol polymer(s), having functionality $f \geq 2$ and average molecular weight preferably ranging from 1 kDa to 50 kDa, more preferably from 5 kDa to 25 kDa and most preferably from 7 kDa to 15 kDa, by reaction with polyisocyanates having functionality $f \geq 2$ and average molecular weight ranging from 50 Da to 2 kDa.

4. The method as claimed in claim 3, wherein the coupling/bridging and end-capping of the polyols takes place in the presence or absence of a monofunctional molecule or monofunctional molecules having a general chemical formula R-XH, where:

   - R includes: aliphatic cyclic or acyclic alkyl and its derivatives; aliphatic cyclic or acyclic alkylene and its derivatives; aryl and its derivatives; aliphatic or aromatic heterocyclic group; and
   - X includes: nitrogen (N), oxygen (O), sulphur (S), chlorine (Cl), bromine (Br).

5. The method as claimed in any preceding claim, wherein the crosslinking step is performed either in the absence of metalorganic catalyst(s), or in the presence of an amount of metalorganic catalyst(s) lower than 1 pphp, preferably lower than 0,1 pphp and more preferably lower than 0,01 pphp.

6. The method as claimed in any preceding claim, wherein aliphatic polyisocyanates, aromatic polyisocyanates or a mixture thereof are added to said prepolymer in order to adjust the total functionality - or NCO index - of isocyanate compounds in the crosslinked polyurethane.

7. The method as claimed in claim 6, wherein the total functionality of isocyanate compounds in the crosslinked polyurethane is adjusted so as to fall in the range 50 to 150, preferably 70 to 130, more preferably 85 to 120 and most preferably 95 to 105.

8. The method as claimed in any preceding claim, wherein the crosslinking step is performed in the presence of low-molecular weight bioactive molecule(s), drug(s), peptide(s), polypeptide(s), protein(s) having at least one isocyanate group and/or at least one secondary and/or primary amine and/or at least one hydroxide and/or at least one sulfhydryl group.

9. The method as claimed in any preceding claim, wherein polyfunctional polyol monomer(s) and/or polymer(s) are added to the reactive isocyanate and polyol blends as crosslinkers prior to the crosslinking of said prepolymer.

10. The method as claimed in any preceding claim, wherein the polyurethane is a polyurethane foam and wherein ionic and/or non-ionic surfactants as well as additives, including antioxidants, pore stabilizers and flame-retardants, are added to the reactive isocyanate and polyol blends prior to the crosslinking of said prepolymer.

11. The method as claimed in claim 10, wherein organic and/or inorganic filler(s) are embedded in the polymeric matrix, said filler(s) being added to the reactive isocyanate and polyol blends prior to the crosslinking or after the solidification of the matrix.

12. The method as claimed in claim 10 or 11, wherein amine-based biocompatible pro-foaming catalysts are employed during the crosslinking of said prepolymer.

13. The method as claimed in claim 12, wherein the amine-based catalysts include reactive primary and/or secondary amino groups as well as tertiary unreactive amino groups.

14. The method as claimed in any of claims 10 to 13, wherein at least one auxiliary blowing agent selected from the group including pentane, isopentane, cyclopentane, supercritical-$CO_2$ and low-thermal conductivity hydrofluoroolefins is used further to carbon dioxide produced during the foaming reaction.

15. A medium-to-high molecular weight hyperbranched-to-partially crosslinked prepolymer having an average molecular weight in the range 2 kDa to 500 kDa and a branching degree higher than 2%, obtained as an intermediate in the method as claimed in any of claims 1 to 14.

16. Polyurethane obtained by the method as claimed in any of claims 1 to 14.

Difunctional
low-molecular weight "B"
( high molar excess)

Branched segment
"A"

$r_c/r > 50$

Branched prepolymer
( Known prior art)

unreacted "B"

$20 > r_c/r \geq 2$

Bridging

Crosslinking,
using usually 1 to 10 pphp
metalorganic catalyst

+ o—o

unreacted B

Crosslinking,
using ≤ 0,05 pphp
metalorganic catalyst

Crosslinked
polyurethane

Hyperbranched-to-partially crosslinked prepolymer
Branching degree >2 %.
The average mol. wt from 2 to 500 kDa
( The synthetic route of this invention)

FIG. 1

Linear segment "A"

Polyfunctional low-molecular weight "B" ( high molar excess)

$r_c/r > 50$

Branched prepolymer "A-B-A" ( Known prior art)

unreacted "B"

$20 > r_c/r \geq 2$

Crosslinking, using usually 1 to 10 pphp metalorganic catalyst

+ unreacted "B"

Crosslinking, using ≤ 0,05 pphp metalorganic catalyst

Crosslinked polyurethane

Hyperbranched-to-partially crosslinked prepolymer
Branching degree >2 %.
The average mol. wt from 2 to 500 kDa
( The synthetic route this invention)

FIG. 2

A) Monofunctional hydrophilic Segment + Aliphatic triisocyanate ( molar excess) → coupling → Hydrophylic building block prepolymer A, Mol.wt. 3'000Da ( WO2011083144A1) + aliphatic diisocyanate + triisocyanate-terminated building block ( eq. wt 193) + water

B) Low-mol. wt. crosslinker polyol + Linear isocyanate-terminated prepolymer → $r_c/r \leq 1$ Chain extension → Branched prepolymer which can undergo an uncontrolled crosslinking unless acid stabilizer is added ( US3179625A) + 2% acid stabilizer Curing → Crosslinked polyurethane

C) Polyfunctional low-to-medium mol.wt polyol segments (A) + Monofunctional monomer(s) + Low-mol. wt. polyisocyanate (B) → $20 > r_c/r \geq 2$ → Hyperbranched-to-partially crosslinked prepolymer Branching degree >2 %, average mol. wt from 2 to 500 kDa , obtained by copolymerization of polyfunctional polyols and polyisocyanates, in presence of chain terminating monofunctional monomer according to a preferred feature of the method disclosed in the present invention + unreacted polyisocyanate → Crosslinking, using ≤ 0,05 pphp metalorganic catalyst

FIG. 3

FIG. 4

FIG. 5

FIG. 6

Europäisches
Patentamt

European
Patent Office

Office européen
des brevets

# EUROPEAN SEARCH REPORT

**Application Number**

EP 18 18 3485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/055261 A2 (UNIV CARNEGIE MELLON [US]; GUELCHER SCOTT A [US]; PATEL VISHAL [US]; H) 26 May 2006 (2006-05-26) * claims 1-51 * | 1-16 | INV. C08G18/10 C08G18/66 C08G18/73 C08G18/76 |
| X | WO 2004/009227 A2 (COMMW SCIENT IND RES ORG [AU]; ADHIKARI RAJU [AU]; GUNATILLAKE PATHIRA) 29 January 2004 (2004-01-29) * claims 1-28 * | 1-16 | C08G18/24 C08G18/40 C08G18/42 |

**TECHNICAL FIELDS SEARCHED (IPC)**

C08G

The present search report has been drawn up for all claims

| Place of search | Date of completion of the search | Examiner |
|---|---|---|
| Munich | 12 February 2019 | Scheuer, Sylvie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 18 3485

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2019

| Patent document cited in search report | | Publication date | Patent family member(s) | | Publication date |
|---|---|---|---|---|---|
| WO 2006055261 | A2 | 26-05-2006 | US | 2007299151 A1 | 27-12-2007 |
| | | | WO | 2006055261 A2 | 26-05-2006 |
| WO 2004009227 | A2 | 29-01-2004 | CN | 1774460 A | 17-05-2006 |
| | | | EP | 1572339 A2 | 14-09-2005 |
| | | | EP | 3042920 A1 | 13-07-2016 |
| | | | JP | 4871509 B2 | 08-02-2012 |
| | | | JP | 2006510747 A | 30-03-2006 |
| | | | MY | 139618 A | 30-10-2009 |
| | | | TW | I331614 B | 11-10-2010 |
| | | | US | 2005238683 A1 | 27-10-2005 |
| | | | US | 2013121969 A1 | 16-05-2013 |
| | | | US | 2013150964 A1 | 13-06-2013 |
| | | | US | 2014099277 A1 | 10-04-2014 |
| | | | WO | 2004009227 A2 | 29-01-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015162523 A1
- WO 2017037649 A1
- WO 2011083144 A1
- WO 2004009227 A2

- WO 2006055261 A3
- US 5646230 A
- US 3179625 A

### Non-patent literature cited in the description

- **SHEIKH et al.** *Journal of Biomaterials Science Polymer,* 2001, vol. 12 (7), 707-19

- **ZHANG et al.** *Journal of Biomedical Materials Research A,* 2003, vol. 67 (2), 389-400